# FASCICULE DE BREVET EUROPEEN

(11) **EP 1 540 143 B1**
(45) Date de publication et mention de la délivrance du brevet: **18.10.2006**
(21) Numéro de dépôt: 03763921.8
(22) Date de dépôt: 25.06.2003
(51) Int. Cl.: F01D 21/04, F16C 19/52, F16C 23/10

(54) **RECENTRAGE D UN ROTOR APRES DECOUPLAGE**
ROTORNEUZENTRIERUNG NACH DER ENTKUPPLUNG
ROTOR RECENTRING AFTER DECOUPLING

(30) Priorité: 27.06.2002 FR 0207978
(43) Date de publication de la demande: 15.06.2005
(73) Titulaire: SNECMA, 75015 Paris (FR)
(72) Inventeur: PLONA, Daniel, F-77870 VULAINES SUR SEINE (FR)
(74) Mandataire: Barbin le Bourhis, Joël
(86) Numéro de dépôt international: PCT/FR2003/001957
(87) Numéro de publication internationale: WO 2004/007915

(56) Documents cités:
- US-A- 5 791 789
- US-A- 6 009 701
- US-A- 6 109 022
- US-B1- 6 325 546

## Description

L'invention concerne le problème de l'intégrité des turbomachines lors d'un découplage provoqué par un balourd accidentel excessif.

Elle concerne plus particulièrement l'intégrité d'un turboréacteur par suite de la rupture d'une pale de soufflante par exemple.

Les turboréacteurs comportent un moteur qui entraîne une soufflante disposée à l'avant du moteur.

Les pales de la soufflante peuvent être abîmées par suite de l'ingestion de corps étrangers, notamment lors du décollage à plein régime. En général, la soufflante est assez robuste pour supporter les effets de telles ingestions de corps étrangers sans trop de dommage et est capable de continuer à fonctionner avec peut-être une efficacité réduite.

Dans certaines circonstances toutefois, la soufflante peut être abîmée au point de perdre des morceaux d'une ou plusieurs pales. Il se produit alors un balourd très important et ceci oblige à couper le moteur pour diminuer les risques de l'aéronef. Toutefois, ce balourd important crée par la perte de pale entraîne des charges cycliques extrêmement importantes qui doivent être supportées au moins pendant la baisse de régime du moteur jusqu'à la vitesse d'autorotation de la soufflante. La vitesse d'autorotation est la vitesse de rotation du moteur, à l'état de non-fonctionnement, résultant du déplacement de l'aéronef dans l'atmosphère.

Une manière habituelle d'éliminer les charges cycliques devant être supportées par la structure consiste à désaccoupler l'arbre de rotation de la soufflante de la structure de stator au niveau du palier avant de l'arbre. Ceci est réalisé habituellement en interposant entre le support de palier et la structure de stator des éléments fusibles qui se rompent dès que les forces radiales à supporter par le palier dépassent une valeur prédéterminée, c'est-à-dire dès l'apparition d'un balourd excessif. L'arbre de la soufflante est alors libre de déplacer radialement dans une certaine mesure et d'orbiter autour de l'axe longitudinal de symétrie du moteur, et la soufflante continue à tourner autour d'un axe de rotation passant au voisinage de son nouveau centre de gravité. Toutefois, dans certaines circonstances, la vibration résultant du balourd qui persiste à la vitesse d'autorotation peut encore être très importante.

Ceci est dû à la fréquence naturelle de vibration de la soufflante et à la diminution de la raideur radiale du palier de support. Aussi existe-t-il dans certains agencements de support d'arbre des moyens pour conserver une certaine raideur au palier, voire de ramener l'axe de l'arbre sensiblement coaxialement à l'axe du moteur.

US 6,073,439 prévoit ainsi entre le support de palier et la structure de stator un élément annulaire élastique coaxial à l'axe du moteur qui exerce sur le support de palier des efforts radiaux dirigés vers l'axe du moteur qui tendent à ramener l'axe du support de palier vers l'axe du moteur. La raideur de la liaison après découplage est évidemment nettement inférieure à la raideur du palier à l'état de fonctionnement normal sans découplage.

US 6,009,701 décrit un palier de support d'arbre de soufflante dont le support de la bague extérieure est fixée à la structure de stator par des éléments fusibles radialement, afin de libérer l'arbre par rapport à la structure de stator en cas de rupture des éléments fusibles. Le support de bague est entouré par un anneau ouvert de forme hélicoïdale qui est susceptible de coopérer avec une paroi conique solidaire de la structure de stator. Cette paroi conique comporte une gorge hélicoïdale qui permet de déplacer l'anneau hélicoïdal d'une position extrême où le débattement possible de l'arbre est maximum vers l'autre position extrême où l'axe de l'arbre est de nouveau coaxial à l'axe du moteur, par suite de l'orbitage de l'axe de l'arbre autour de l'axe du moteur pendant la baisse de régime de la soufflante de sa vitesse en fonctionnement jusqu'à la vitesse d'autorotation.

US 6,009,701 représente l'état de la technique la plus proche de l'invention, car le roulage de l'anneau ouvert dans la gorge hélicoïdale entraîne un mouvement de précession dudit anneau dans une direction opposée à l'orbitage de l'axe du support de palier, et le positionnement final dudit anneau assure une raideur du palier sensiblement égale à la raideur à l'état de fonctionnement normal. Mais cet agencement nécessite un déplacement axial de l'anneau ouvert sur le support de palier, et un dispositif pour immobiliser avec certitude l'anneau ouvert en fonctionnement normal, afin qu'il ne puisse se déplacer intempestivement lors du fonctionnement normal du moteur, ce qui pourrait empêcher un découplage ultérieur en cas de balourd excessif.

Le but de l'invention est de proposer un dispositif de recentrage qui en fonctionnement normal du moteur ne puisse empêcher un découplage ultérieur, et qui assure une raideur satisfaisante du palier après le recentrage.

L'invention concerne donc un dispositif de recentrage d'un arbre de rotor par rapport à l'axe X d'une structure de stator en cas de découplage provoqué par un balourd excessif, ledit arbre étant, dans les conditions normales de fonctionnement, coaxial à l'axe X et radialement soutenu par un support de palier disposé dans un alésage d'axe X de ladite structure de stator, ledit support de palier ayant un diamètre extérieur inférieur au diamètre dudit alésage, afin de permettre un orbitage dudit support de palier autour de l'axe X en cas de découplage, et étant relié à la structure de stator par des éléments fusibles radialement, ledit dispositif comportant des moyens pour recentrer le support de palier après le découplage.

Selon l'invention ce dispositif est caractérisé par le fait que les moyens de recentrage du support de palier comportent des moyens pour générer un mouvement de précession dudit support de palier dans le sens inverse de son orbitage après le découplage et une pluralité de dispositifs pour diminuer le débattement autorisé dudit support de palier par rapport à l'axe X, lesdits dispositifs de diminution du débattement étant régulièrement répartis autour des axes des deux pièces constituées par la structure de stator et le support de palier et comportant chacun une première rampe prévue sur l'une desdites deux pièces et une protubérance prévue sur l'autre desdites deux pièces, ladite protubérance étant, dans les conditions normales de fonctionnement, radialement espacée de ladite première rampe et étant susceptible d'entrer en contact avec ladite première rampe lors du mouvement de précession dudit support de palier.

Très avantageusement, pour assurer un recentrage idéal, toutes les protubérances sont susceptibles d'être en contact en même temps avec les premières rampes.

Les premières rampes et les protubérances étant des éléments statiques équipant respectivement la structure de stator et le support de palier ou inversement le support de palier et la structure de stator, leur positionnement, dans les conditions normales de fonctionnement, est défini de manière précise par le positionnement du support de palier sur la structure de stator lors du montage.

Lorsque le recentrage idéal est obtenu, toutes les protubérances sont en contact respectivement avec les premières rampes, ce qui assure une raideur de palier voisine de la raideur du palier dans les conditions normales de fonctionnement.

Selon une caractéristique supplémentaire avantageuse, la première rampe a le profil d'une développante de cercle, et deux premières rampes adjacentes sont raccordées par un épaulement radial.

En fonctionnement normal, la protubérance est disposée au voisinage de l'épaulement.

De préférence, la première rampe a le profil d'une spirale d'Archimède.

Selon un premier mode de réalisation, les protubérances sont réalisées sous la forme de patins.

Selon un deuxième mode de réalisation, la protubérance est formée par une portion d'extrémité d'une deuxième rampe ayant un profil semblable à celui de la première rampe.

Selon une première forme de réalisation, la première rampe et la protubérance sont réalisées en métal, et pour éviter les chocs lors du découplage, la protubérance est radialement espacée de la première rampe associée d'une distance supérieure au déplacement radial attendu du support de palier lors du découplage, dans les conditions normales de fonctionnement.

Selon une deuxième forme de réalisation, la première rampe est réalisée en élastomère et la protubérance est métallique. Si la protubérance est une portion d'une deuxième rampe, la distance entre les deux rampes peut être nettement inférieure au déplacement radial attendu du support de support, ce qui assure en cas de découplage un roulage de l'une des rampes sur l'autre et la précession du support de palier entraînant un recentrage du support de palier.

De préférence, les moyens pour générer le mouvement de précession du support de palier comportent un anneau en élastomère solidaire de la structure de stator, ledit anneau entourant le support de palier et étant en contact permanent avec ce dernier afin que le support de palier puisse rouler sans glisser dans l'alésage dudit anneau après le découplage.

Ledit anneau en élastomère est avantageusement disposé dans l'alésage de la structure de stator. Ceci permet de supprimer le choc entre le support de palier et la structure de stator lors du découplage.

D'autres avantages et caractéristiques de l'invention ressortiront à la lecture de la description suivante, faite à titre d'exemple et en référence aux dessins annexés dans lesquels :
la figure 1 est une demi-coupe schématique, selon un plan radial contenant l'axe de symétrie d'un turboréacteur, de la région du palier avant supportant l'arbre d'une soufflante dans les conditions normales de fonctionnement ;
la figure 2 est une coupe radiale selon la ligne II-II de la figure 1 qui montre les dispositifs de diminution du débattement du support de palier dans les conditions normales de fonctionnement selon un mode de réalisation de l'invention ;
la figure 3 est semblable à la figure 2 et montre un deuxième mode de réalisation de l'invention ;
la figure 4 est semblable à la figure 1 et montre le décalage de l'axe de l'arbre par rapport à l'axe de symétrie du moteur après découplage ;
la figure 5 montre la disposition des éléments des dispositifs de diminution du débattement du support de palier après recentrage à la suite d'un découplage ;
les figure 6 et 7 montrent des variantes de réalisation.

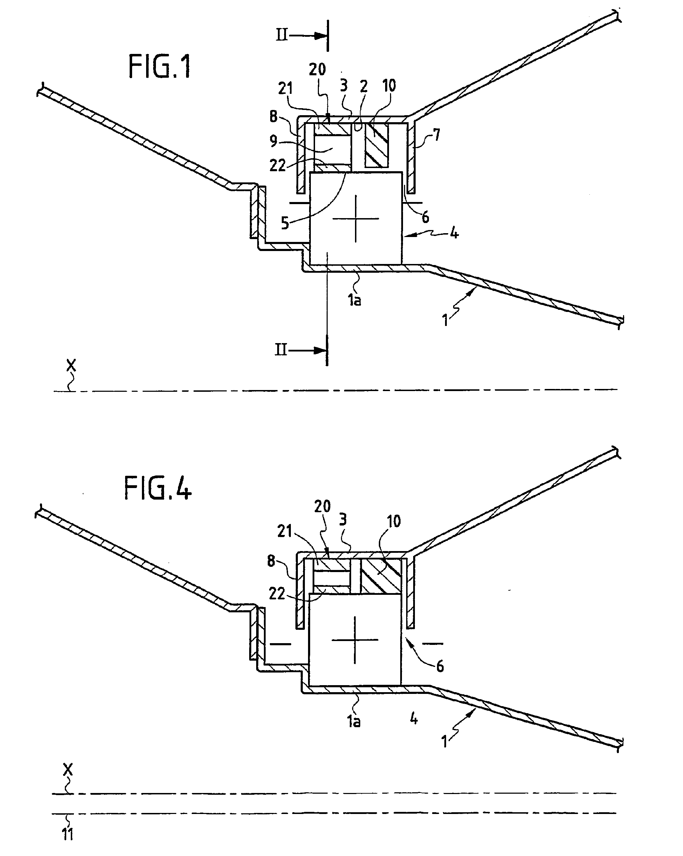

La figure 1 montre schématiquement la partie avant d'un arbre 1 d'entraînement d'une soufflante d'un turboréacteur d'axe X qui est retenu coaxialement à l'axe X dans l'alésage 2 d'une structure de stator 3 au moyen d'un palier 4 dont la bague intérieure est montée sans jeu à la périphérie d'une portion la de l'arbre 1, et dont la bague extérieure est retenue dans l'alésage d'un support de palier 5, ce support de palier 5 ayant un diamètre nettement inférieur au diamètre de l'alésage 2 de la structure de stator 3.

Le support de palier 5 est relié à la structure de stator 3 par des éléments fusibles radialement, ou des zones de rupture programmée, référencés 6. Les références 7 et 8 désignent des butées axiales solidaires de la structure de stator 3 destinées à limiter le déplacement axial du support de palier 5.

Une espace annulaire 9 est ainsi ménagé radialement entre la périphérie du support du palier 5 et la paroi de la structure de stator 3 qui définit l'alésage 2. L'épaisseur radiale de cet espace est égale à la différence de diamètre entre l'alésage 2 et le diamètre externe du support de palier 5, et elle est choisie suffisamment grande pour permettre un déplacement radial de l'axe du support de palier 5, en cas de rupture des éléments fusibles 6, par suite d'un balourd excessif crée par une rupture d'aube par exemple au cours du fonctionnement normal du turboréacteur.

Ainsi que cela est montré sur la figure 1, une anneau en élastomère 10 solidaire de la structure de stator 3 est disposé dans l'espace annulaire 9. Cet anneau en élastomère entoure le support de palier 5 et comporte un alésage intérieur dont le diamètre est légèrement supérieur au diamètre du support de palier 5.

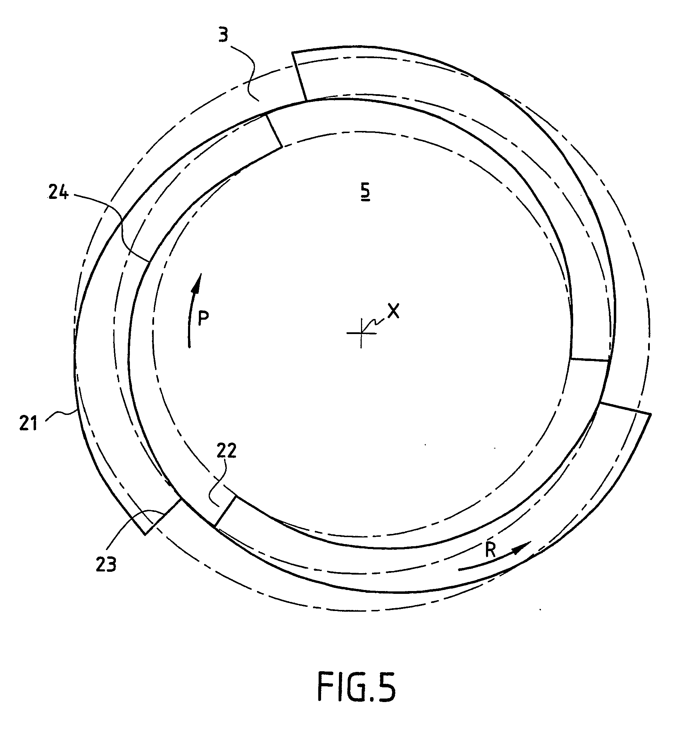

Lors de la rupture des éléments fusibles 6, ainsi que cela est montré sur la figure 4, l'axe 11 de l'arbre 1, qui est également l'axe du support de palier 5, s'écarte de l'axe X de la structure de stator 3, et le support de palier 5 vient appuyer contre la surface de l'alésage intérieur de l'anneau en élastomère 10.

L'axe 11 se met à orbiter autour de l'axe X dans le sens de rotation R de l'arbre 1. Il en résulte que le support de palier 5 se met à rouler, de préférence sans glissement, dans l'alésage intérieur de l'anneau en élastomère 10. Ce roulage entraîne un mouvement de précession P du support de palier 5 dans une direction opposée au sens de rotation R, comme dans un système de train épicycloïdal, dont la vitesse est fonction des diamètres du support de palier 5 et de l'alésage intérieur de l'anneau en élastomère.

L'agencement de palier proposé comporte en outre des dispositifs 20 pour diminuer le débattement de l'axe X, après le découplage, et qui sont mis en oeuvre par le mouvement de précession P.

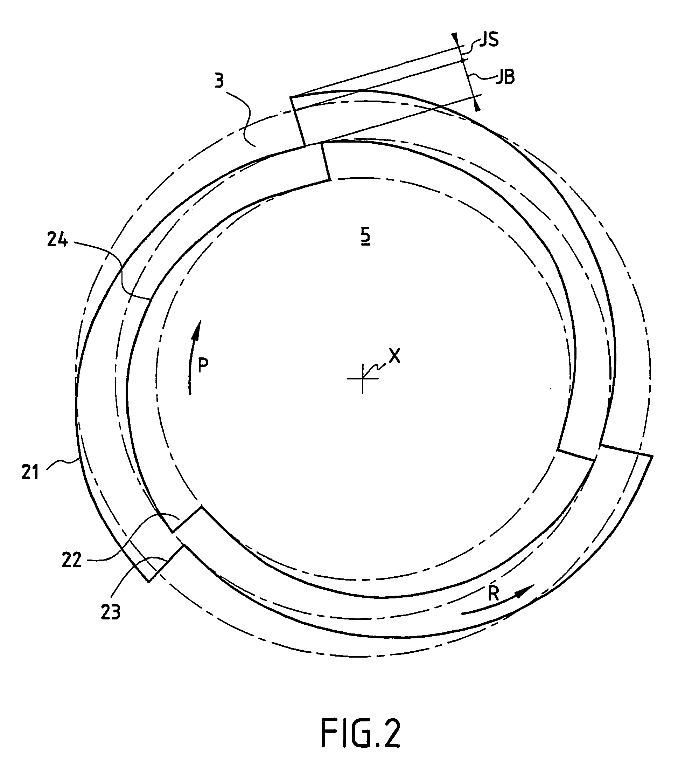

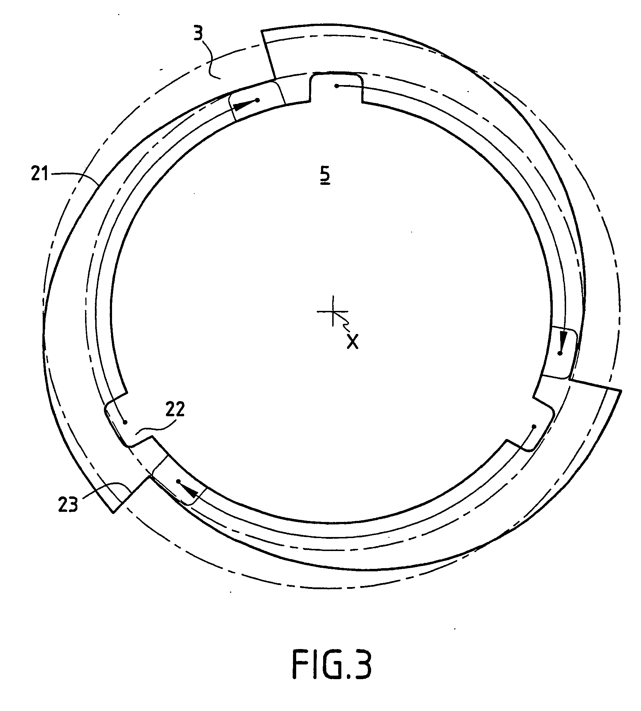

Ces dispositifs 20, au nombre de 3 sur les exemples montrés sur les figures 2 et 3, sont régulièrement répartis autour de l'axe X, et comportent chacun une première rampe 21, ayant de préférence le profil d'une développante de cercle ou d'une spirale d'Archimède, prévue sur la structure de stator 3 ou le support de palier 5, et une protubérance 22 axialement décalée par rapport à la première rampe 21, et prévue sur l'autre pièce, support de palier 5 ou structure de stator 3. Deux rampes adjacentes 21 sont raccordées par un épaulement radial 23.

Dans les conditions normales de fonctionnement, c'est-à-dire en l'absence de découplage, la protubérance 22 est disposée circonférentiellement au voisinage d'un épaulement radial 23, et la distance séparant la protubérance 22 de la première rampe associée 21 est supérieure au déplacement radial attendu du support de palier 5 juste après le découplage, pour éviter les chocs entre une protubérance 22 et la première rampe associée 21, lors de l'apparition du découplage, les efforts radiaux engendrés par le découplage étant alors repris par l'anneau en élastomère 10.

Lors du mouvement de précession P du support de palier 5, après découplage, les protubérances 22 s'éloignent des épaulements associés 23. Du fait des profils des premières rampes 21, les jeux minimum qui existent entre les sommets des protubérances 22 et les premières rampes 21 vont aller en décroissant jusqu'à ce que l'une d'elles entre en contact avec la première rampe 21 associée. A partir de ce moment le débattement possible du support de palier 5 est limité par ces contacts successifs, et l'axe 11 du support de palier 5 se rapproche de l'axe X lors d'un mouvement de précession P ultérieur du support de palier 5.

Lorsque les trois protubérances 22 sont en même temps en contact avec les trois premières rampes 21, l'axe 11 est confondu avec l'axe X et on obtient un recentrage idéal. Le profil des premières rampes 21 est choisi de telle manière que cette condition puisse se réaliser, en choisissant une distance, entre le sommet des protubérances 22 et l'axe de symétrie, X ou 11, de la pièce qui les porte, comprise entre les distances des extrémités des épaulements radiaux 23 et l'axe de symétrie, 11 ou X, de la pièce qui les porte.

Sur la figure 2, on a représenté par JB, le déplacement attendu de l'axe 11 du support de palier 5, lors du découplage et par JS, le jeu de sécurité pour éviter les chocs lors de l'apparition du découplage. Au début du mouvement de précession P, le jeu JS diminue, sans qu'il y ait de contacts entre les protubérances 22 et les premières rampes 21. Puis le jeu JB est consommé ce qui entraîne des contacts successifs entre les protubérances 22 et les premières rampes 21. Lorsque tout le jeu JB est consommé, comme cela est montré sur la figure 5, le support de palier 5 est recentré sur l'axe X.

La figure 3 montre des protubérances 22 réalisées sous la forme de patins solidaires du support de palier 5, les premières rampes 21 étant solidaires de la structure de stator 3.

La figure 2 montre des protubérances 22 constituées par les portions d'extrémité d'un ensemble de deuxièmes rampes 24 qui ont des profils identiques aux profils des premières rampes 21.

Sur la figure 5, on a montré la position des rampes 21 et 24, de la figure 2, lorsque les trois portions d'extrémité 22 des deuxièmes rampes 24 sont en contact en même temps avec les premières rampes 21, et qui correspond à un recentrage idéal du support de palier 5 et par le fait même de l'arbre 1.

Le support de palier 5 est alors immobilisé en rotation, par effet de coin des portions d'extrémité 22 et des premières rampes 21.

Les rampes 21 et 24 sont réalisées de préférence en métal et peuvent être disposées dans l'espace annulaire 9 ainsi que cela est montré sur la figure 1.

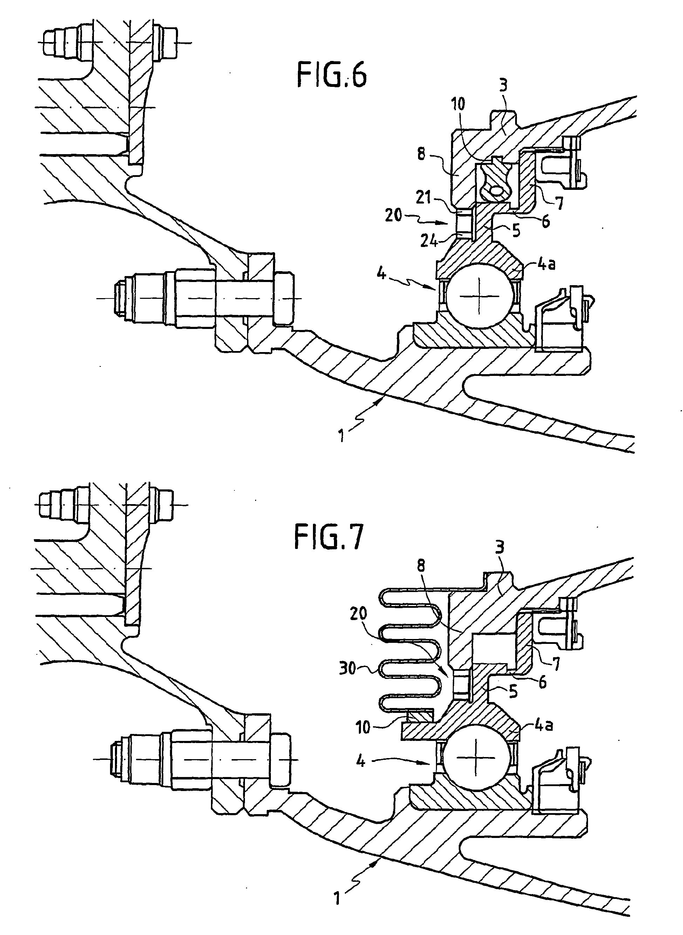

Mais les premières rampes 21 peuvent également être prévues sur la butée axiale 8, et les deuxièmes rampes 24 ou les patins peuvent être prévus sur la bague extérieure 4a du palier 4, à l'extérieur de l'espace annulaire 9, ainsi que cela est montrée sur les figures 6 et 7.

La figure 6 montre en outre un anneau 10 réalisé sous la forme d'une bague souple en élastomère.

Mais ainsi que cela est montré sur la figure 7, l'anneau 10 peut être une bague rigide reliée à la structure de stator 3 par un support métallique souple 30 situé à l'extérieur de l'espace annulaire 9. Ce qui compte, c'est que le support de palier 5 puisse être en contact permanent avec l'anneau 10 après le découplage pour permettre le mouvement de précession P dont la vitesse est proportionnelle au rapport de démultiplication afin d'entraîner l'annulation progressive des jeux JS et JB lorsque la première rampe 21 et la protubérance 22 se rapprochent l'une de l'autre.

Sur les exemples de réalisation montrés sur les dessins, les trois protubérances 22 peuvent être en contact ensemble avec les trois rampes 21, ce qui assure un recentrage idéal. Il est à noter que l'on peut prévoir un dispositif pour limiter l'angle de précession maximum du support de palier 5 par rapport à la structure de stator 3, pour faire en sorte que les protubérances 22 se positionnent à faible distance des premières rampes 21 après un mouvement de précession prédéterminée du support de palier 5, qui correspond à un débattement résiduel de faible amplitude.

Une autre variante du dispositif proposé consiste à remplacer au moins l'une des rampes métalliques 21 et 24 par des rampes en élastomère. Le seul inconvénient de cette solution est la raideur plus faible obtenue après le recentrage mais dans ce cas on n'a plus besoin d'utiliser un anneau 10 en élastomère ni un support souple 30 métallique tels que représentés sur les figures 6 et 7, les rampes en élastomère assurant également la fonction de précession du support de palier 5 pour consommer le jeu.

## Revendications

1. Dispositif de recentrage d'un arbre de rotor (1) par rapport à l'axe X d'une structure de stator (3) en cas de découplage provoqué par un balourd excessif, ledit arbre étant, dans les conditions normales de fonctionnement, coaxial à l'axe X et radialement soutenu par un support de palier (5) disposé dans un alésage d'axe X de ladite structure de stator (3), ledit support de palier (5) ayant un diamètre extérieur inférieur au diamètre dudit alésage, afin de permettre un orbitage dudit support de palier autour de l'axe X en cas de découplage, et étant relié à la structure de stator (3) par des éléments (6) fusibles radialement, ledit dispositif comportant des moyens pour recentrer le support de palier après le découplage,
**caractérisé par le fait que** les moyens de recentrage du support de palier (5) comportent des moyens (10) pour générer un mouvement de précession P dudit support de palier (5) dans le sens inverse de son orbitage après le découplage et une pluralité de dispositifs (20) pour diminuer le débattement autorisé dudit support de palier (5) par rapport à l'axe X, lesdits dispositifs de diminution du débattement étant régulièrement répartis autour des axes (X, 11) des deux pièces constituées par la structure de stator (3) et le support de palier (5) et comportant chacun une première rampe (21) prévue sur l'une desdites deux pièces et une protubérance (22) prévue sur l'autre desdites deux pièces, ladite protubérance (22) étant, dans les conditions normales de fonctionnement radialement espacée de ladite première rampe (21) et étant susceptible d'entrer en contact avec ladite première rampe lors du mouvement de précession P dudit support de palier (5).

2. Dispositif selon la revendication 1, **caractérisé par le fait que** toutes les protubérances (22) sont susceptibles d'être en contact en même temps avec les premières rampes (21).

3. Dispositif selon l'une des revendications 1 ou 2, **caractérisé par le fait que** la première rampe (21) a le profil d'une développante de cercle, et deux premières rampes adjacentes sont raccordées par un épaulement radial (23).

4. Dispositif selon la revendication 3, **caractérisé par le fait que** la première rampe (21) a le profil d'une spirale d'Archimède.

5. Dispositif selon l'une des revendications 1 à 4, **caractérisé par le fait que** les protubérances (22) sont réalisées sous la forme de patins.

6. Dispositif selon l'une des revendications 1 à 4, **caractérisé par le fait que** la protubérance (22) est formée par une portion d'extrémité d'une deuxième rampe (24) ayant un profil semblable à celui de la première rampe (21).

7. Dispositif selon l'une quelconque des revendications 1 à 6, **caractérisé par le fait que** la première rampe (21) et la protubérance (22) sont réalisées en métal.

8. Dispositif selon la revendication 7, **caractérisé par le fait que**, dans les conditions normales et fonctionnement, la protubérance (22) est radialement espacée de la première rampe (21) associée d'une distance supérieure au déplacement radial (JB) attendu du support de palier (5) lors du découplage.

9. Dispositif selon la revendication 6, **caractérisé par le fait que** la première rampe (21) est réalisée en élastomère et la deuxième rampe (24) est métallique et peut rouler sans glisser sur la première rampe, après découplage, afin de générer le mouvement de précession P.

10. Dispositif selon l'une quelconque des revendications 1 à 8, **caractérisé par le fait que** les moyens pour générer le mouvement de précession (P) comportent un anneau en élastomère (10) solidaire de la structure de stator (3), ledit anneau (10) entourant le support de palier (5) et étant, après découplage, en contact permanent avec ce dernier afin que le support de palier (5) puisse rouler sans glisser dans l'alésage dudit anneau (10).

11. Dispositif selon la revendication 10, **caractérisé par le fait que** ledit anneau (10) en élastomère est disposé dans l'alésage de la structure de stator (3).

12. Dispositif selon la revendication 10, **caractérisé par le fait que** ledit anneau (10) est rigide et relié à la structure de stator par un support (30) souple métallique.

13. Dispositif selon l'une quelconque des revendications 1 à 12, **caractérisé par le fait qu'**il comporte trois premières rampes (21) et trois protubérances (22).

## Claims

1. A recentering device for a rotor shaft (1) for recentering a rotor shaft relative to the axis X of a stator structure (3) in the event of decoupling caused by excessive imbalance, said shaft, in normal operating conditions, lying on the axis X and being radially supported by a bearing support (5) that is disposed in a bore of axis X in said stator structure (3), said bearing support (5) having an outside diameter that is smaller than the diameter of said bore, in order to enable said bearing support to orbit about the axis X in the event of decoupling, said bearing support (5) being connected to the stator structure (3) by radially fusible elements (6), said device comprising means for recentering the bearing support after decoupling,
said recentering device being **characterised by** the fact that the recentering means of the bearing support (5) comprise means (10) for generating a movement in precession P by said bearing support (5) in the direction contrary to the direction of its orbits after decoupling, and a plurality of devices (20) for decreasing the permitted clearance of said bearing support (5) relative to the axis X, said devices for decreasing clearance being arranged regularly around the axes (X, 11) of the two parts constituted by the stator structure (3) and the bearing support (5), and each part including a first ramp (21) that is provided on one of said two parts and a protuberance (22) provided on the other of said two parts, said protuberance (22) being, in normal operating conditions, radially spaced apart apart from said first ramp (21) and capable of coming into contact with said first ramp during the movement in precession P of said bearing support (5).

2. A device according to claim 1, **characterised by** the fact that all the protuberances (22) are capable of being in contact with the first ramps (21) at the same time.

3. A device according to claim 1 or claim 2, **characterised by** the fact that the first ramp (21) has the profile of an involute to a circle, and two adjacent first ramps are connected by a radial shoulder (23).

4. A device according to claim 3, **characterised by** the fact that the first ramp (21) has the profile of an Archimedes spiral.

5. A device according to one of claims 1 to 4, **characterised by** the fact that the protuberances (22) are made in the form of blocks.

6. A device according to one of claims 1 to 4, **characterised by** the fact that the protuberance (22) is formed by an end portion of a second ramp (24), said second ramp having a profile similar to the profile of the first ramp (21).

7. A device according to any one of claims 1 to 6, **characterised by** the fact that the first ramp (21) and the protuberance (22) are made of metal.

8. A device according to claim 7, **characterised by** the fact that, the protuberance (22) is located, in normal operating conditions, in a position that is radially spaced apart from the associated first ramp (21) by a distance that is greater than the expected radial displacement (JB) of the bearing support (5) during decoupling.

9. A device according to claim 6, **characterised by** the fact that the first ramp (21) is made of elastomer and the second ramp (24) is made of metal and can roll on the first ramp, without sliding, after decoupling, in order to generate the movement in precession P.

10. A device according to any one of claims 1 to 8, **characterised by** the fact that the means for generating the movement in precession (P) comprise an elastomer ring (10) secured to the stator structure (3), said ring (10) surrounding the bearing support (5) and being in permanent contact therewith so that the bearing support (5) can roll without sliding in the bore of said ring (10) after decoupling.

11. A device according to claim 10, **characterised by** the fact that said ring (10) in elastomer is disposed in the bore of the stator structure (3).

12. A device according to claim 10, **characterised by** the fact that said ring (10) is rigid and is connected to the stator structure by a flexible metal support (30).

13. A device according to any one of claims 1 to 12, **characterised by** the fact that it comprises three first ramps (21) and three protuberances (22).

## Patentansprüche

1. Vorrichtung zur Nachzentrierung einer Rotorwelle (1) auf die Achse X eines Statoraufbaus (3) im Falle eines Entkuppelns durch eine extreme Unwucht, wobei diese Welle unter normalen Betriebsbedingungen koaxial zu der Achse X verläuft und durch eine Lagerstütze (5), die in einer Bohrung der Achse X dieses Statoraufbaus (3) angeordnet ist, radial gehalten wird, wobei der Außendurchmesser dieser Lagerstütze (5) kleiner ist als der Durchmesser dieser Bohrung, um im Falle eines Entkuppelns ein Kreisen dieser Lagerstütze um die Achse X herum zu ermöglichen, und wobei die Lagerstütze mit dem Statoraufbau (3) durch radial schmelzbare Elemente (6) verbunden ist, wobei diese Vorrichtung Mittel zum Nachzentrieren der Lagerstütze nach dem Entkuppeln aufweist,
**dadurch gekennzeichnet,**
**dass** die Mittel zum Nachzentrieren der Lagerstütze (5) Mittel (10) zur Erzeugung einer Präzessionsbewegung P der Lagerstütze (5) in der entgegengesetzten Richtung zu deren Kreisbewegung nach dem Entkuppeln sowie eine Vielzahl von Vorrichtungen (20) zur Verringerung des zulässigen Ausschlags der Lagerstütze (5) zur Achse X umfassen, wobei diese Vorrichtungen zur Verringerung des Ausschlags in regelmäßigen Abständen um die Achsen (X, 11) der beiden Teile herum angeordnet sind, welche von dem Statoraufbau (3) und der Lagerstütze (5) gebildet werden und jeweils eine erste Rampe (21) aufweisen, die an einem dieser beiden Teile vorgesehen ist, sowie eine Ausstülpung (22) aufweisen, die an dem anderen dieser beiden Teile vorgesehen ist, wobei diese Ausstülpung (22) unter normalen Betriebsbedingungen radial in Abstand von dieser ersten Rampe (21) angeordnet ist und geeignet ist, bei der Präzessionsbewegung P der Lagerstütze (5) mit dieser ersten Rampe in Berührung zu kommen.

2. Vorrichtung nach Anspruch 1,
**dadurch gekennzeichnet,**
**dass** alle Ausstülpungen (22) geeignet sind, gleichzeitig mit den ersten Rampen (21) in Berührung zu kommen.

3. Vorrichtung nach einem der Ansprüche 1 oder 2,
**dadurch gekennzeichnet,**
**dass** die erste Rampe (21) das Profil einer Kreisevolvente hat und dass zwei aneinandergrenzende erste Rampen durch einen radialen Absatz (23) miteinander verbunden sind.

4. Vorrichtung nach Anspruch 3,
**dadurch gekennzeichnet,**
**dass** die erste Rampe (21) das Profil einer Archimedes-Spirale hat.

5. Vorrichtung nach einem der Ansprüche 1 bis 4,
**dadurch gekennzeichnet,**
**dass** die Ausstülpungen (22) in der Form von Gleitschuhen ausgeführt sind.

6. Vorrichtung nach einem der Ansprüche 1 bis 4,
**dadurch gekennzeichnet,**
**dass** die Ausstülpung (22) von einem Endabschnitt einer zweiten Rampe (24) gebildet wird, die ein ähnliches Profil wie die erste Rampe (21) aufweist.

7. Vorrichtung nach einem der Ansprüche 1 bis 6,
**dadurch gekennzeichnet,**
**dass** die erste Rampe (21) und die Ausstülpung (22) aus Metall ausgeführt sind.

8. Vorrichtung nach Anspruch 7,
**dadurch gekennzeichnet,**
**dass** sich die Ausstülpung (22) unter normalen Betriebsbedingungen in einem Abstand von der zugehörigen ersten Rampe (21) befindet, der größer ist als die bei einem Entkuppeln erwartete radiale Verschiebung (JB) der Lagerstütze (5).

9. Vorrichtung nach Anspruch 6,
**dadurch gekennzeichnet,**
**dass** die erste Rampe (21) aus Elastomer und die zweite Rampe (24) aus Metall ausgeführt ist und nach Entkuppeln ohne zu gleiten auf der ersten Rampe rollen kann, um die Präzessionsbewegung P zu erzeugen.

10. Vorrichtung nach einem der Ansprüche 1 bis 8,
**dadurch gekennzeichnet,**
**dass** die Mittel zur Erzeugung der Präzessionsbewegung P aus einem Elastomerring (10) bestehen, der mit dem Statoraufbau (3) fest verbunden ist, wobei dieser Ring (10) die Lagerstütze (5) umgibt und sich nach Entkuppeln in ständigem Kontakt mit dieser befindet, damit die Lagerstütze (5) ohne zu gleiten in der Bohrung dieses Rings (10) rollen kann.

11. Vorrichtung nach Anspruch 10,
**dadurch gekennzeichnet,**
**dass** dieser Elastomerring (10) in der Bohrung des Statoraufbaus (3) angeordnet ist.

12. Vorrichtung nach Anspruch 10,
**dadurch gekennzeichnet,**
**dass** dieser Ring (10) starr ist und mit dem Statoraufbau durch eine biegsame, metallene Stütze (30) verbunden ist.

13. Vorrichtung nach einem der Ansprüche 1 bis 12,
**dadurch gekennzeichnet,**
**dass** sie drei erste Rampen (21) und drei Ausstülpungen (22) aufweist.
